Europäisches Patentamt

European Patent Office

Office européen des brevets

(11) Publication number: **0 422 349 A1**

## EUROPEAN PATENT APPLICATION

(21) Application number: **90115082.1**

(22) Date of filing: **06.08.90**

(51) Int. Cl.⁵: **A01N 39/00, A01N 33/12,**
//(A01N39/00,39:00,33:12)

(30) Priority: **08.09.89 IT 2166889**

(43) Date of publication of application:
**17.04.91 Bulletin 91/16**

(84) Designated Contracting States:
**CH DE ES GB GR LI**

(71) Applicant: **AVALON FINANZIARIA S.r.l.**
**Via Cesare Balbo, 6**
**I-20136 Milan(IT)**

(72) Inventor: **Vittadini, Felice**
**Via Lamarmora 3/A**
**I-20122 Milan(IT)**

(74) Representative: **Dr. Ing. A. Racheli & C.**
**Viale San Michele del Carso, 4**
**I-20144 Milano(IT)**

(54) **Disinfectant and method of preparation thereof.**

(57) A liquid disinfectant (and a method of preparation thereof), particularly for medical use and essentially consisting of 6.69 to 20.00% of quaternary ammonium salts as active ingredients and 23.49 to 70.47% of inert components with a stabilising or synergistic action; the balance being deionized water. All percentages refer to percentages of total weight.

EP 0 422 349 A1

## DISINFECTANT AND METHOD OF PREPARATION THEREOF

This invention relates to a disinfectant particularly designed for medical use, but which can also be used in any other sector, for example in the disinfection of human beings, animals, foodstuffs or environments.

The product is in liquid form and could be transformed into an aerosol for the disinfection of enclosed environments, such as operating theatres.

In general, a disinfectant is a physical or chemical means for preventing the putrefaction of organic substances; in a more restricted sense, it is a chemical means for obstructing the development of germs and the disease processes which these germs provoke in living organisms and which are analogous, or which may be considered analogous, to the processes of putrefaction. In terms human and animal hygiene and disease, the purpose of disinfection is to destroy infective germs and those present in the environment of a patient or sick animal.

Pharmacodynamic studies aimed at describing the relationship between the chemical structure and particular method of action of different antiseptics make it clear that the best antiseptic is the one which has the greatest noxious effect against pathogenic germs and the least harmful effect on the tissues with which it comes into contact.

The number of substances used for antiseptic purposes is extraordinarily large and increases year by year; for this reason, it is felt that there is no point in giving a list of them.

The aim of the present invention is to provide a wide-spectrum disinfectant which has a rapid bactericide activity in topical applications and good deodorising capabilities, and which is not harmful to the skin or mucosa. Furthermore, this product can be transformed into an aerosol for the disinfection of confined environments.

A further aim of the present invention is to provide a method for the preparation of such a disinfectant.

These aims have been reached by the creation of a liquid disinfectant whose active part essentially consists of quaternary ammonium salts; in particular, the analogous series of alkyl-dimethyl-benzylammonium chloride. These salts are: alkyl-dimethyl-benzylammonium chloride (Salt A) in percentages of 3.60 to 10.80%, in particular 7.21%; diisobutyl-phenoxy-ethoxy-ethyl-dimethyl-benzylammonium chloride (Salt B) in percentages of 1.60 to 4.81%, in particular 3.21%; diisobutyl-cresoxy-ethoxy-ethyl-dimethyl-benzylammonium chloride (Salt C) in percentages of 1.49 to 4.42%, in particular 2.95%. In addition, this disinfectant is also composed of inert substances: propylene glycol USP in percentages of 12.74 to 38.22%, in particular 25.48%; triethanolamine in percentages of 7.00 to 21.00%, in particular 14.1%; and sodium nitrite in percentages of 3.75 to 11.25%, in particular 7.5%, the balance being deionized water to 100.00% of total composition, said deionized water having an electrical conductivity of 1 mega-ohm or better.

These inert materials have a stabilising and synergistic function: they increase the activity of the active salts, thus making the product more effective.

The disinfectant product of the present invention has a pH of between 9.5 and 10.5 and is obtained by a method comprising: adding to a calculated quantity of deionized water (by means of pumping) first the propylene glycol and then the triethanolamine, agitating or mixing each time in order to obtain a homogeneous solution; salt A is then pumped into the solution, followed by salt B (both in either liquid or solid forms), agitating or mixing in order to make the solution homogeneous; salt C, in crystalline or liquid form, is then added and, while continuing to mix, this is followed by solid state sodium nitrite; finally, the solution is diluted with deionized water in order to obtain the desired volume.

The product is active against the most widely known (both gram-positive and gram-negative) germs, while in general the competition products containing quaternary ammonium salts are active mostly against gram-positive organisms and show remarkable lack of activity against gram-negative ones.

This is essentially due to the synergism of action of the three salts mixture and moreover to the right dosage of all components of this formulation.

The following table concerns the bactericidal activity of the disinfectant object of the present invention.

EP 0 422 349 A1

## TABLE

| BACTERIAL STRAIN | N° OF TESTED STRAINS | % BACTERIOCIDE ACTIVITY |
|---|---|---|
| E.COLI | 3 | 100 |
| PSEUDOMONAS AERUGINOSA | 4 | 100 |
| STAFILOCOCCUS AUREUS | 3 | 100 |
| ENTEROCOCCUS | 3 | 100 |
| STAFILOCOCCUS EPIDERMIDIS | 3 | 100 |
| KLEBSIELLA PNEUMONIAE | 2 | 100 |
| SERRATIA MARCESCENS | 1 | 100 |
| STREPTOCOCCUS A Group | 1 | 100 |
| ACINTEBACTER ANTITRATUS | 1 | 100 |
| CITROBACTER FRENUDII | 1 | 100 |
| ENTEROBACTER CLOACAE | 1 | 100 |
| PROTEUS VULGARIS | 1 | 100 |
| SALMONELLA TYPHI-MURIUM | 1 | 100 |

What follows is an exemplary embodiment of the present invention which is intended to be purely illustrative and in no way limiting.

## EXAMPLE

Six hundred and twentyfour litres of the disinfectant of the present invention are prepared by means of the method previously described.

One hundred and fifty litres of deionized water, sufficient to adequately dilute the constituent parts, are put into a 624 litre (or larger) capacity tank. In three different phases, the following ingredients are added by means of a pump: 159 litres of 99% propylene glycol, 88 litres of 99% ethanolamine and 90 litres of salt A (50% liquid), taking care after each addition to agitate the solution in order to make it homogeneous. Then, while continuing to agitate, 40 litres of salt B (50% liquid) followed by 18.4 Kg. of salt C (100% crystalline) are added. Finally, with the solution still under constant agitation, 46.8 Kg. of alimentary sodium nitrite (100% crystalline) is added. The solution is then diluted with deionized water, q.s. to reach a volume of 624 litres.

The product thus obtained has a pH of between 9.5 and 10.5.

The product subject of the present invention can be diluted to varying extents according to the different uses previously described.

The high degree of synergy among the quaternary ammonium salts makes the product rapidly active against a wide range of gram-positive and gram-negative germs, moulds, fungi, spores and viruses - an activity that cannot be found in any other product with the same atoxic characteristics. Furthermore, the efficacy of the product is not compromised by prolonged storage at room temperature.

## Claims

1. A liquid disinfectant, particularly for medical, human, animal, food and environmental use characterized in that it is essentially composed of 6.69 to 20.00% of quaternary ammonium salts as active ingredients and of inert components in percentages ranging from 23.49 to 70.47%; the balance being deionized water, and all percentages being percentages of total weight.

3

2. A disinfectant according to claim 1, characterized in that the active part is composed of alkyl-dimethyl-benzylammonium chloride (Salt A) in percentages of 3.60 to 10.80%, in particular 7.21%; diisobutyl-phenoxy-ethoxy-ethyl-dimethyl-benzylammonium chloride (Salt B) in percentages of 1.60 to 4.81%, in particular 3.21%; diisobutyl-cresoxy-ethoxy-ethyl-dimethyl-benzylammonium chloride (Salt C) in percentages of 1.49 to 4.42%, in particular 2.95%.

3. A disinfectant according to claim 1 characterized in that the inert ingredients are propylene glycol USP in percentages of 12.74 to 38.22%, in particular 25.48%; triethanolamine in percentages of 7.00 to 21.00%, in particular 14.1%; and sodium nitrite in percentages of 3.75 to 11.25%, in particular 7.5%.

4. A disinfectant according to anyone of claims 1 to 3, characterized in that it has a pH of between 9.5 and 10.5.

5. A disinfectant according to anyone of claims 1 to 4, characterized in that the water is deionized and has an electrical conductivity of 1 mega-ohm or better.

6. A method for the preparation of a disinfectant consisting essentially of quaternary ammonium salts, characterized in that, under constant agitation and at room temperature, to a calculated quantity of deionized water, are added first the propylene glycol, 5. then the triethanolamine, agitating or mixing each time in order to obtain a homogeneous solution, then alkyl-dimethyl-benzylammonium chloride (salt A) in liquid or solid form, followed by diisobutyl-phenoxy-ethoxy-ethyl-dimethyl-benzylammonium chloride (salt B) always in liquid or solid form, and diisobutyl-cresoxy-ethoxy-ethyl-dimethyl-benzylammonium chloride (salt C) in crystalline or liquid form, and, while continuing to mix, this is followed by solid state sodium nitrite, as last component, the solution is finally diluted with deionized water, in order to obtain the desired volume.

7. Use of the composition prepared according to claim 6, as disinfectant with rapid bactericide activity against most widely known gram-positive and gram-negative germs.

Claims for the following Contracting State: ES

1. A method for the preparation of a disinfectant consisting essentially of quaternary ammonium salts, characterized in that, under constant agitation and at room temperature, to a calculated quantity of deionized water, are added first the propylene glycol, then the triethanolamine, agitating or mixing each time in order to obtain a homogeneous solution, then alkyl-dimethyl-benzylammonium chloride (salt A) in liquid or solid form, followed by diisobutyl-phenoxy-ethoxy-ethyl-dimethyl-benzylammonium chloride (salt B) always in liquid or solid form, and diisobutyl-cresoxy-ethoxy-ethyl-dimethyl-benzylammonium chloride (salt C) in crystalline or liquid form, and, while continuing to mix, this is followed by solid state sodium nitrite, as last component, the solution is finally diluted with deionized water, in order to obtain the desired volume.

2. Method for the preparation of a disinfectant according to claim 1, characterized in that the components are added in the following percentages: alkyl-dimethyl-benzylammonium chloride (Salt A) in percentages of 3.60 to 10.80%, in particular 7.21%; diisobutyl-phenoxy-ethoxy-ethyl-dimethyl-benzylammonium chloride (Salt B) in percentages of 1.60 to 4.81%, in particular 3.21%; diisobutyl-cresoxy-ethoxy-ethyl-dimethyl-benzylammonium chloride (Salt C) in percentages of 1.49 to 4.42%, in particular 2.95%, the inert substances, such as propylene glycol USP in percentages of 12.74 to 38.22%, in particular 25.48%; triethanolamine in percentages of 7.00 to 21.00%, in particular 14.1% and sodium nitrite in percentages of 3.75 to 11.25%, in particular 7.5%, the balance being deionized water to 100.00% of total composition, said deionized water having an electrical conductivity of 1 mega-ohm or better.

3. Use of the composition prepared according to claim 1, as disinfectant with rapid bactericide activity against most widely known gram-positive and gram-negative germs.

European Patent Office

**PARTIAL EUROPEAN SEARCH REPORT**

which under Rule 45 of the European Patent Convention shall be considered, for the purposes of subsequent proceedings, as the European search report

Application number

EP 90 11 5082

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 786 797 (H.G. LEDERER)<br><br>* Column 1, lines 20-22,30-37; example I; column 2, lines 3-11, 22-23,36-38; claims 1-2,6-7 *<br><br>-- | 1-7 | A 01 N 39/00<br>A 01 N 331/12//<br>(A 01 N 39/00<br>A 01 N 39:00<br>A 01 N 33:12) |
| X | FR-A-2 383 671 (CHEMED CORP.)<br><br>* Page 1, line 26 - page 2, line 5; page 3, lines 25-28,36-37; page 4, lines 6-8; page 5, lines 21-23; page 6, lines 11-14,22-26; examples 2,4 *<br><br>-- | 1,3,4 | |
| P,X | EP-A-0 377 120 (INTERCHEM AG)<br><br>* The whole document *<br><br>---- | 1-7 | TECHNICAL FIELDS SEARCHED (Int. Cl.4)<br><br>A 01 N |

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: 1-6

Claims searched incompletely: 7

Claims not searched:

Reason for the limitation of the search:

Claim 7: Not searched as far as it concerns the treatment of the human or animal body by surgery or therapy (Art. 52(4) EPC)).

| Place of search | Date of completion of the search | Examiner |
|---|---|---|
| THE HAGUE | 14-12-1990 | MÜLLNERS |

EPO Form 1505.1 03.82